# EUROPEAN PATENT APPLICATION

(11) **EP 4 629 058 A1**
(43) Date of publication of application: **08.10.2025**
(21) Application number: 25164290.6
(22) Date of filing: 18.03.2025
(51) Int. Cl.: G06F 8/51, G06F 8/74, G06F 8/34, G06F 8/35

(54) **CONVERTING METHOD AND SYSTEM BETWEEN TABLE FILE AND GRAPHICS PROGRAM, COMPUTER READABLE STORAGE MEDIUM AND ELECTRONIC DEVICE**

(30) Priority: 01.04.2024 JP 2024059205; 22.05.2024 CN 202410644175
(71) Applicant: Shanghai Tosun Technology Ltd., Shanghai 201804 (CN)
(72) Inventor: Liu, Chu, Shanghai (CN); Xie, Yueyin, Shanghai (CN); Mo, Mang, Shanghai (CN)
(74) Representative: Sun, Yanan

(57) **Abstract**

A converting method between a table file and a graphics program, wherein, converting the table file into the graphics program comprises: reading the table file in order to read the text contents and coordinate information of all cells on at least one page of the table file into corresponding two-dimensional object arrays and setting the name of each two-dimensional object array to the corresponding page name; sequentially parsing each two-dimensional object array into a flowchart region and a property region page by page; and creating the graphics program based on the parse result.

## Description

### CROSS-REFERENCE TO THE RELATED APPLICATIONS

This application is based upon and claims priority to the Chinese Patent Application No. 202410644175.X filed on May 22, 2024, and the Japanese Patent Application No. 2024-059205 filed on April 1, 2024, the entire contents of which are incorporated herein by reference.

### TECHNICAL FIELD

The present disclosure relates to the field of vehicular software development technologies and in particular to a converting method between a table file and a graphics program and a computer readable storage medium.

### BACKGROUND

In vehicular software development and test, table files are usually used for definition of test cases and writing of test steps in a vehicular test process whereas graphics programs are usually used for model-based development of vehicular software and execution of test programs. Therefore, it is a general demand for converting a test case written by a table file into an executable graphics program.

This conversion process is usually difficult to complete automatically because the formats of the table files of various vehicle manufacturers are variable. When a table file is converted into a graphics program by hand, repeated manual conversion cost will occur due to case change of the table file. Even if a converter for converting a table file into a graphics program is made specially, a new problem may occur: when a user performs program modification in the graphics program, and desires to synchronize this modification to the table file, it is also difficult to achieve automation, increasing the conversion cost.

### SUMMARY

The present invention relates to a converting method between a table file and a graphics program, wherein, converting the table file into the graphics program comprises: reading the table file in order to read the text contents and coordinate information of all cells on at least one page of the table file into corresponding two-dimensional object arrays and setting the name of each two-dimensional object array to the corresponding page name; sequentially parsing each two-dimensional object array into a flowchart region and a property region page by page; and creating the graphics program based on the parse result; and/or,

converting the graphics program into the table file comprises: creating blank table pages, wherein the number of the blank table pages is equal to the sum of the number of main programs and the number of the nested sub-programs in the graphics program; based on program types in the graphics program, creating corresponding table pages sequentially, wherein one page corresponds to the main program and other pages all correspond to the corresponding nested subprograms; storing the created table file.

Other features and advantages of the present disclosure will be described in the following description, and some of these will become apparent from the description or be understood by implementing the present disclosure. The objectives and other advantages of the present disclosure can be implemented or obtained by structures specifically indicated in the description and accompanying drawings.

To make the above purposes, features, and advantages of the present disclosure clearer and more understandable, the present disclosure is described in detail below using preferred examples with reference to the accompanying drawings.

### BRIEF DESCRIPTION OF THE DRAWINGS

In order to more clearly describe the technical solutions in the embodiments of the present disclosure or in the prior arts, the drawings required for descriptions of the specific embodiments or the prior arts will be briefly introduced. Apparently, the drawings described hereunder are only some embodiments of the present disclosure. Those skilled in the arts can obtain other drawings based on these drawings without making creative work.
FIG. 1 (a) is a step diagram of converting a table file into a graphics program in a converting method between a table file and a graphics program according to some embodiments of the present disclosure.
FIG. 1 (b) is a step diagram of converting a graphics program into a table file in a converting method between a table file and a graphics program according to some embodiments of the present disclosure.
FIG. 2 is a schematic diagram of a graphics program created in case 4 according to some embodiments of the present disclosure.
FIG. 3 is an effect diagram of a graphics program added with a variable in case 4 according to some embodiments of the present disclosure.
FIG. 4 is a schematic diagram of a main program in a graphics program generated in case 4 according to some embodiments of the present disclosure.
FIG. 5 is a schematic diagram illustrating a nested subprogram in a graphics program generated in case 4 according to some embodiments of the present disclosure.
FIG. 6 is a schematic diagram illustrating a result of parsing in a property region by an execution unit check in a graphics program generated in case 4 according to some embodiments of the present disclosure.
FIG. 7 is a schematic diagram illustrating a two-dimensional object array file in case 5 according to some embodiments of the present disclosure.
FIG. 8 is a schematic diagram of a fourth page in a two-dimensional object array file in case 5 according to some embodiments of the present disclosure.
FIG. 9 is a schematic diagram of a graphics program in case 6 according to some embodiments of the present disclosure.
FIG. 10 is a schematic diagram of a table content generated in case 6 according to some embodiments of the present disclosure.
FIG. 11 is a schematic diagram illustrating a nested subprogram in a graphics program in case 7 according to some embodiments of the present disclosure.
FIG. 12 is a schematic diagram illustrating a table content generated in case 7 according to some embodiments of the present disclosure.
FIG. 13 is a schematic diagram illustrating a name of a page where a table content generated in case 7 is located according to some embodiments of the present disclosure.
FIG. 14 is a schematic diagram illustrating a table content in case 8 according to some embodiments of the present disclosure.
FIG. 15 is a schematic diagram illustrating a property of an execution unit check of a graphics program in case 9 according to some embodiments of the present disclosure.
FIG. 16 is a schematic diagram illustrating a first page of table of a table file in case 10 according to some embodiments of the present disclosure.
FIG. 17 is a schematic diagram illustrating a second page of table of a table file in case 10 according to some embodiments of the present disclosure.
FIG. 18 is a schematic diagram illustrating a third page of table of a table file in case 10 according to some embodiments of the present disclosure.
FIG. 19 is a schematic diagram illustrating a fourth page of table of a table file in case 10 according to some embodiments of the present disclosure.
FIG. 20 is a schematic diagram illustrating a fifth page of table of a table file in case 10 according to some embodiments of the present disclosure.
FIG. 21 is a schematic diagram illustrating a main program in a graphics program generated in case 10 according to some embodiments of the present disclosure.
FIG. 22 is a schematic diagram illustrating a main program in a graphics program to be converted in case 11 according to some embodiments of the present disclosure.
FIG. 23 is a schematic diagram illustrating a first-layer nested subprogram in a graphics program to be converted in case 11 according to some embodiments of the present disclosure.
FIG. 24 is a schematic diagram illustrating a second-layer nested subprogram in a graphics program to be converted in case 11 according to some embodiments of the present disclosure.
FIG. 25 is a schematic diagram illustrating a third-layer nested subprogram in a graphics program to be converted in case 11 according to some embodiments of the present disclosure.
FIG. 26 is a schematic diagram illustrating an empty program in a graphics program to be converted in case 11 according to some embodiments of the present disclosure.
FIG. 27 is a schematic diagram illustrating a table file converted in case 11 according to some embodiments of the present disclosure.
FIG. 28 is a principle block diagram illustrating a conversion system between a table file and a graphics program according to some embodiments of the present disclosure.
FIG. 29 is a principle block diagram illustrating an electronic device according to some embodiments of the present disclosure.
FIG. 30 is a principle block diagram illustrating an electronic device according to some embodiments of the present disclosure.
FIG. 31 is a principle block diagram illustrating a system according to some embodiments of the present disclosure.

### DETAILED DESCRIPTION OF THE EMBODIMENTS

In order to make the object, technical solutions and advantages of the embodiments of the present disclosure clearer, the technical solutions of the present disclosure will be fully and clearly described in combination with drawings. Apparently, the embodiments described herein are only some embodiments rather than all embodiments. All other embodiments obtained by those skilled in the art based on these embodiments without making creative work shall fall within the scope of protection of the present disclosure.

In vehicular software development and test, table files are usually used for definition of test cases and writing of test steps in a vehicular test process whereas graphics programs are usually used for model-based development of vehicular software and execution of test programs. Therefore, it is a general demand for converting a test case written by a table file into an executable graphics program.

This conversion process is usually difficult to complete automatically because the formats of the table files of various vehicle manufacturers are variable. When a table file is converted into a graphics program by hand, repeated manual conversion cost will occur due to case change of the table file. In the related arts, there is a converter for converting a table file into a graphics program, but a new problem may occur: when a user performs program modification in the graphics program, and desires to synchronize this modification to the table file, it is also difficult to achieve automation, increasing the conversion cost.

Therefore, at least one embodiment provides a converting method between a table file and a graphics program, which includes:

converting the table file into the graphics program, including: reading the table file in order to read the text contents and coordinate information of all cells on at least one page of the table file into corresponding two-dimensional object arrays and setting the name of each two-dimensional object array to the corresponding page name; sequentially parsing each two-dimensional object array into a flowchart region and a property region page by page; and creating the graphics program based on the parse result, and/or,

converting the graphics program into the table file, including: creating blank table pages, wherein the number of the blank table pages is equal to the sum of the number of main programs and the number of the nested sub-programs in the graphics program; based on program types in the graphics program, creating corresponding table pages sequentially, wherein one page corresponds to the main program and other pages all correspond to the corresponding nested subprograms; storing the created table file.

In this embodiment, the converting method between the table file and the graphics program supports mutual conversion between the table file and the graphics program. Thus, a user can correctly and synchronously convert those modifications made in the table file or the graphic program into another format. Those file writers and test case makers can easily maintain the file; and those test operators can easily understand and write the graphics program. Especially, in the vehicular test field, the conversion from a table file to a graphics program can improve the conversion efficiency from a test case to a test implementation, avoiding the error possibility brought by manual conversion. Further, the conversion from a graphics program to a table file enables a graphics program modified by a user in real time to be converted into a test case for storage, avoiding the error possibility brought by manual conversion.

Various non-limiting implementations of the embodiments of the present disclosure will be described below in details with accompanying drawings.

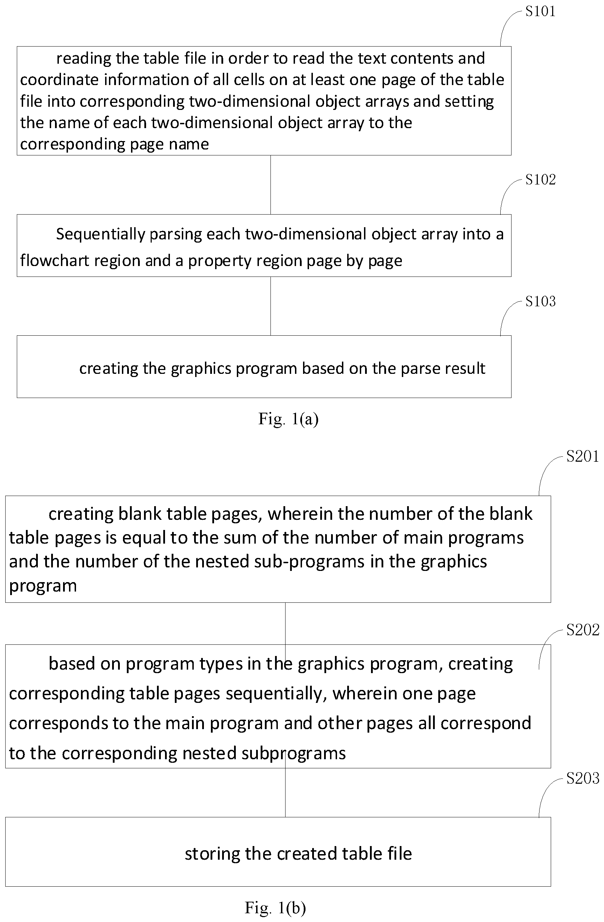

As shown in FIGS. 1 (a) and (b), one or more embodiments provide a converting method between a table file and a graphics program, which includes: a method of converting the table file into the graphics program and/or a method of converting the graphics program into the table file.

The method of converting the table file into the graphics program includes the following steps.

At step S101, the table file is read in order to read the text contents and coordinate information of all cells on at least one page of the table file into corresponding two-dimensional object arrays and set the name of each two-dimensional object array to the corresponding page name.

At step S102, sequentially each two-dimensional object array is parsed into a flowchart region and a property region page by page.

At step S103, the graphics program is created based on the parse result.

The method of converting the graphics program into the table file includes the following steps.

At step S201, blank table pages are created, wherein the number of the blank table pages is equal to the sum of the number of main programs and the number of the nested sub-programs in the graphics program.

At step S202, based on program types in the graphics program, corresponding table pages are created sequentially, wherein one page corresponds to the main program and other pages all correspond to the corresponding nested subprograms.

At step S203, the created table file is stored.

Specifically, in some embodiments, the number of the nested subprograms may be 0.

Specifically, one table file corresponds to one graphics program. The table file at least includes one page corresponding to the main program in the graphics program and if there are other pages, such other pages all correspond to the nested subprograms in the graphics program. Further, the page corresponding to the main program usually is a first page of the table file, which may be named "Main".

In some embodiments, the flowchart region includes: at least one execution unit type character respectively corresponding to execution units in the graphics program; and, parsing the two-dimensional object array into the flowchart region includes:

from top to bottom, sequentially reading the text content of each array element and determining the text content;

if the text content is determined as an execution unit type character, determining an execution unit type based on the text content; and when the content of the upper array element of the current execution unit type character is also the execution unit type character, marking the corresponding execution unit as the next execution unit of the upper execution unit;

if the text content is determined as empty, skipping the text content to continue reading the next text content; and,

if an entire column of text contents from top to bottom is empty, completing the parsing of the flowchart region.

### Case 1

A method of parsing the two-dimensional object array into the flowchart region will be detailed below with one case.

Below is an exemplary two-dimensional object array having four rows and six columns:

| EP | | Def | Name | Comment | Configuration |
|---|---|---|---|---|---|
| NOP | | Program | GP1 | | 1;1;am_GP1;Program1 |
| NOP | | A2 | NOP | | 0;1;0 |
| | | A3 | NOP | | 0;1;0 |

wherein the first column is the flowchart region, and the third to sixth columns are the property region.

The flowchart region includes three execution unit type characters EP, NOP, NOP. If it is an empty graphics program, at least the execution unit type character EP is to be retained.

The method of parsing the two-dimensional object array into the flowchart region is described below.

By starting from the first column, the text content of each array element is read row by row from top to bottom and then determined. In this case, from the first column, sequentially present are EP, NOP and NOP, which are all execution unit type characters; the fourth row is an empty row, thus there are only three execution units in this column. The upper array element of the third row NOP is NOP, i.e. execution unit type character, and thus the third row NOP is the next execution unit of the second row NOP execution unit; further, the upper array element of the second row NOP is EP, i.e. execution unit type character, and thus the second row NOP is the next execution unit of the first row EP execution unit. The first row EP is the first execution unit which serves as an entry point of all graphics programs.

When the second column is parsed, since the first row of the second column is empty, the blank text is skipped to continue reading the next text content.

When the second column is parsed, since the entire column is empty, the parsing of the flowchart region is completed.

In some embodiments, the flowchart region further includes a connector;
parsing the two-dimensional object array into the flowchart region further includes:
from left to right, sequentially reading the text content of each array element and determining the text content;
if the text content is determined as the connector, marking the first execution unit found to the left of the connector as the execution unit supporting rightward execution while marking the first execution unit found to the right of the connector as the next execution unit of the supporting rightward execution of the aforementioned execution unit.

### Case 2

The method of parsing the two-dimensional object array into the flowchart region will be detailed below with one case.

Below is an exemplary two-dimensional object array having five rows and eight columns.

| EP | | | | Def | Name | Comment | Configuration |
|---|---|---|---|---|---|---|---|
| NOP | - | NOP | | Program | GP1 | | 1;1;am_GP1;Program1 |
| NOP | | | | A2 | NOP | | 0;1;0 |
| | | | | A3 | NOP | | 0;1;0 |
| | | | | C2 | NOP | | 0;1;0 |

The first to third columns are the flowchart region and the fifth to eighth columns are the property region.

The method of parsing the two-dimensional object array in this case into the flowchart region is described below.

The text content of each array element is read sequentially from top to bottom and from left to right and then determined.

If it is determined as an execution unit type character, for example, the first column in this case, its parse method is the same as that in the case 1. If it is determined as a connector, that is, when the second column is parsed and the connector "-"of the second row is seen, the first execution unit found to the left of the connector is marked, that is, the "NOP" at the first column and the second row is an execution unit supporting rightward execution and meanwhile, the first execution unit found to the right of the connector is marked, that is, the "NOP" at the third column and the second row is the next execution unit of the "NOP" execution unit at the first column and the second row supporting rightward execution.

When the second column is parsed, since the first row of the second column is empty, the blank text is skipped to continue reading the next text content.

When the fourth column is parsed, since the entire column is empty, the parsing of the flowchart region is completed.

In some embodiments, the property region includes a definition column, a name column, a comment column and a parameter configuration column.

The method of parsing the two-dimensional object array into the property region includes:
from top to bottom, sequentially reading the text content of each array element in the definition column, wherein the text content is one character of the execution unit definition, the variable definition or the program definition;
from top to bottom, sequentially reading the text content of each array element in the name column, wherein the text content is the name property character correspondingly defined in the definition column, for example, an execution unit name, a variable name, and a program name;
from top to bottom, sequentially reading the text content of each array element in the comment column, wherein the text content is the comment property character correspondingly defined in the definition column.

When one array element is a character content of the program definition, the parameter configuration column corresponding to the array element describes property information of a target graphics program, for example, program name, display name, repetition number and whether to activate and the like.

When one array element is a character content of the variable definition, the parameter configuration column corresponding to the array element describes variable information of the target graphics program, for example, variable type and initial variable value and the like.

When one array element is a character content of the execution unit definition, the parameter configuration column corresponding to the array element describes execution unit information of the target graphics program. The character content of the execution unit definition is a cell coordinate value, and different execution unit types have different parameter configuration requirements. The execution units have the following types.

Entry point type, shortened as Entry Point (EP): one graphics program has only one entry point and it is an execution unit executed by the graphics program for the first time. The entry point does not execute any substantive operation and has to perform execution downward after completing execution.

No operation type, shortened as No Operation (NOP): the No Operation does not execute any substantive operation and can perform downward or rightward execution after completing the No Operation.

Parameter configuration information: none.

Signal determination type, shortened as Read (RD): this execution unit reads one or more signals and determines whether the value of the signals is within a set range. If the determination meets expectation, the program execution is continued downward and otherwise continued rightward. The execution unit of the signal determination type supports two execution routes at the same time: downward execution route and rightward execution route.

The parameter configuration information includes: determining timeout, variable number, name of each variable, type of each variable, a minimum value of each variable, a maximum value of each variable and determining pass condition (and or or) and the like.

Signal write type, shortened as Write (WR): this execution unit writes one or more signals. The execution unit of signal write type supports downward or rightward execution route but does not support downward and rightward execution routes at the same time.

The parameter configuration information includes: variable number, name of each variable, type of each variable, and value to be written into each variable and the like.

Jump to type, shortened as Jump to (JMP): this execution unit supports the program to jump to a target execution unit to continue execution. The Jump to type has no downward or rightward connected route.

The parameter configuration information includes: a jump label (jump between same labels) and there are several jump labels.

Jump from type, shortened as Jump from (FROM): This execution unit supports the program to jump to this execution unit from the JMP type to continue execution. The Jump from type supports downward or rightward execution route but does not support downward and rightward execution routes at the same time.

The parameter configuration information includes: a jump label (jump between same labels) and there are several jump labels.

Function call type, shortened as Application Interface (API): this execution unit is responsible for calling a target API function with a specific parameter. The function call type supports downward or rightward execution route but does not support downward and rightward execution routes at the same time.

The parameter configuration information may include but not limited to: API function name, API function type (for example, system API, miniprogram library, and user-written API), whether to ignore a return value of the API function, variable type to be written into the return value, variable name to be written into the return value, and parameter number of the API function, type of each parameter, name of each parameter and value of each parameter and the like.

Subchart type, shortened as Subchart Group (Group): this execution unit includes nested subprograms. The nested subprogram type supports downward or rightward execution route but does not support downward and rightward execution routes at the same time.

The parameter configuration information may include but not limited to: a variable type corresponding to repetition number and a variable name corresponding to repetition number and the like.

Expression type, shortened as Expression (EXP): this execution unit is used to execute a specific mathematic expression. The expression type supports downward or rightward execution route but does not support downward and rightward execution routes at the same time.

The parameter configuration information includes independent variable number, expression, variable type to be written into the expression result, variable name to be written into the expression result, type of each independent variable and name of each independent variable and the like.

### Case 3

The method of parsing the two-dimensional object array into the property region will be detailed below within one case.

Below is an exemplary two-dimensional object array having six rows and eight columns.

| EP | | | | Def | Name | Comment | Configuration |
|---|---|---|---|---|---|---|---|
| NOP | - | NOP | | Program | GP1 | program comment | 1;1;am_GP1;Program1 |
| NOP | | | | A2 | NOP1 | first Unit under EP | 0;1;0 |
| | | | | A3 | NOP2 | second Unit under first Unit | 0;1;0 |
| | | | | C2 | NOP3 | third Unit on right side | 0;1;0 |
| | | | | Var | v0 | variable define | 0;0; |

The range of the property region is the fifth to eighth columns, which are the definition column, the name column, the comment column and the parameter configuration column respectively.

The first row of the fifth column is Def representing a character content of the definition column. The second row Program represents that this row is the character content of the program definition. The character contents of the third to fifth rows are a cell coordinate value representing the row corresponding to the corresponding cell coordinate value is a character of a relevant execution unit definition, for example, A2 represents a relevant execution unit is at the coordinate of the A-th column and the second row. The character content Var of the sixth row represents that this row is a character of the variable definition.

The first row of the sixth column is Name representing this column is a name column. The second row GP1 represents the name of the program is GP1. The third to fifth rows represent the names of relevant execution units are NOP1, NOP2 and NOP3 respectively. The sixth row represents the name of the variable is v0.

The first row of the seventh column is Comment representing this column is the comment column. The second row is a comment of the program GP1. The third to fifth rows represent the comments of relevant execution units NOP1, NOP2 and NOP3. The sixth row represents the comment of the variable v0.

The first row of the eighth column is Configuration representing this column is the parameter configuration column. The second row is the parameter configuration information of the program GP1. The third to fifth rows represent the parameter configuration information of relevant execution units NOP1, NOP2 and NOP3. The sixth row represents the parameter configuration information of the variable v0.

In some embodiments, creating the graphics program based on the parse result includes: based on the property information of the target graphics program, creating the graphics program; based on the variable information of the target graphics program, adding a variable into the graphics program; based on the parsed flowchart region, creating the execution units of the main program of the graphics program and the transition relationship between the execution units; then, based on the parsed flowchart region, creating nested subprograms of the graphics program accordingly, and associating each nested subprogram with a corresponding execution unit of the main program or of its upper-level nested subprogram; finally, based on the parsed flowchart region, creating execution units accordingly in the nested subprograms of the graphics program and the transition relationship between the execution units; and, based on the execution unit information of the target graphics program, configuring each execution unit of the graphics program.

### Case 4

The method of creating the graphics program based on the parse result will be detailed below with one case.

Below are two exemplary two-dimensional object arrays. Table 1 represents a parse result of the main program of the graphics program, and has eight rows and eight columns.

**Table 1 Parse result of main program**

| EP | | | | Def | Name | Comment | Configuration |
|---|---|---|---|---|---|---|---|
| NOP | - | JMP | | Program | GP1 | program comment | 1;1;am_GP1;Program1 |
| NOP | | | | Var | v0 | variable define | 0;0; |
| FROM | | | | A2 | check | first Unit under EP | 1;1;0 |
| Group | | | | A3 | Ignore | this is ignored | 0;1;0 |
| | | | | A4 | jmp from | jump from other sources | jmp |
| | | | | A5 | Group | this is a sub group | 1 |
| | | | | C2 | jmp to | jump to another position | jmp |

Table 2 represents a parse result of the nested subprograms of the graphics program, and has three rows and six columns.

**Table 2 Parse result of the nested subprograms**

| EP | | Def | Name | Comment | Configuration |
|---|---|---|---|---|---|
| NOP | | A2 | NOP1 | this is NOP1 | 0;1;0 |
| NOP | | A3 | NOP2 | this is NOP2 | 0;1;0 |

The two two-diemensional object arrays have been parsed into the flowchart region and the property region. The property region of the main program includes the properties of the program and the variable, and the property region of the nested subprograms does not include the properties of the program and the variable. The definition column, the name column, the comment column and the parameter configuration column in the property region of the two tables have been parsed and extracted. Next, the graphics program is created in the following steps.

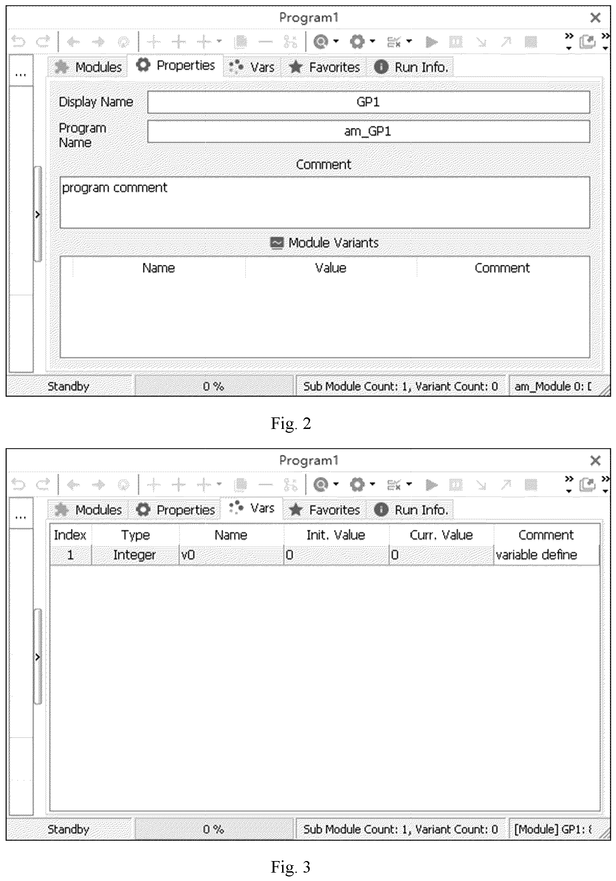

Firstly, one empty graphics program is created by using the name, comment, and parameter configuration information of the parsed Program, as shown in FIG. 2.

In this empty graphics program, the window title of the graphics program module is Program1, which comes from the parameter configuration information of the parsed Program. The display name of the graphics program submodule is GP1, which comes from the name column of the parsed Program. The program name of the graphics program submodule is am_GP1, which comes from the parameter configuration information of the parsed Program. The comment information of the graphics program submodule is program comment, which comes from the comment column of the parsed Program.

Secondly, based on parsed variable information, a variable is added to the graphics program. As shown in FIG. 3, one variable with the type of integer is added, which comes from the parameter configuration information of the parsed variable v0. The variable name is v0 which comes from the name column of the parsed variable. The initial variable value is 0 which comes from the parameter configuration information of the parsed variable v0. The variable comment is "variable define", which comes from the comment column of the parsed variable.

Then, based on the flowchart region parsed in Table 1, the execution units of the main program of the graphics program and the transition relationship between the execution units are created, where the names (types) of the execution units of the main program are as follows:
Entry (EP), check (NOP), Ignore (NOP), jmp to (JMP), jmp from (FROM), Group (Group).Their jump relationship is as below:
Entry jumps downward to check;
check branches and jumps downward to Ignore and branches and jumps rightward to jmp to;
Ignore jumps downward to jmp from;
jmp to jumps rightward to jmp from;
jmp from jumps downward to Group;

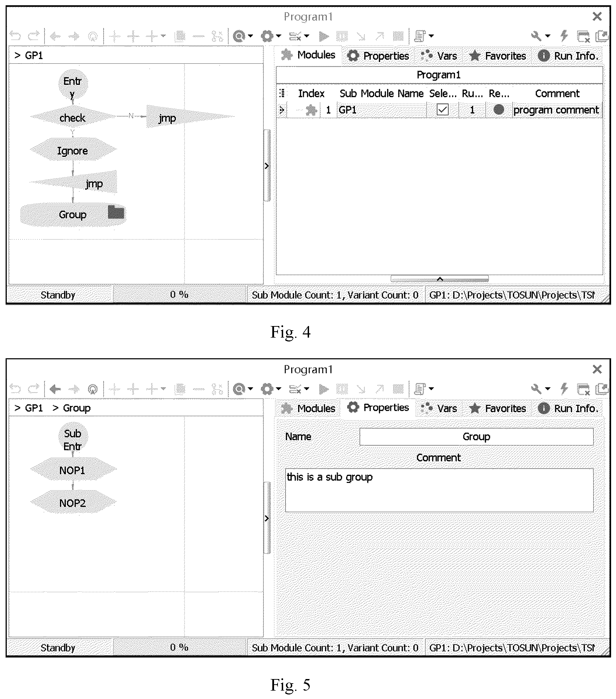

Based on the above inter-execution-unit jump relationship, the flowchart of the main program can be created as shown in FIG. 4.

Then, likewise, base on the flowchart region parsed in Table 2, the nested subprograms of the graphics program are created and then each nested subprogram is associated with the corresponding execution unit of the main program or of the upper-level nested subprogram of the nested subprogram, that is, the execution unit named Group in the main program in Table 1 is associated with the nested subprogram in Table 2 such that a user can open the nested subprogram by double clicking the execution unit named Group in the main program interface.

Then, based on the parsed flowchart region, each execution unit in the nested subprograms of the graphics program and the transition relationship between the execution units are created. In this case, the nested subprogram is a nested subprogram named Group in the main program. The names (types) of the execution units are as follows:
Sub Entry (EP), NOP1 (NOP), and NOP2 (NOP). Their jump relationship is as below:
Sub Entry jumps downward NOP1l;
NOP1 jumps downward to NOP2;
based on the above created execution units and the jump relationship between the execution units, the nested subprogram flowchart can be created as shown in FIG. 5.

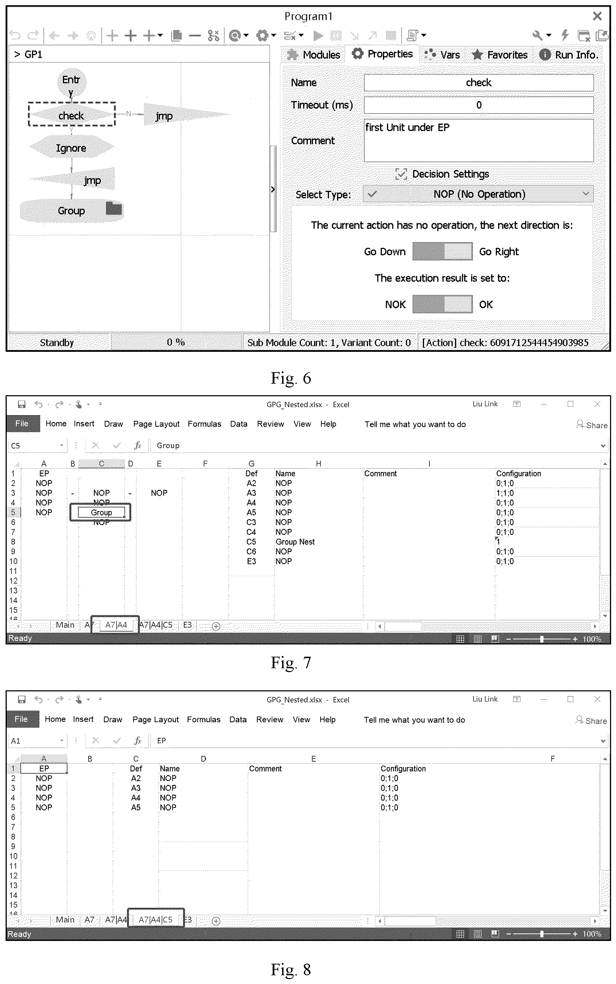

Finally, based on the execution unit information of the target graphics program, each execution unit of the graphics program is configured. With the execution unit named check as an example, based on the parse result of its property region, its execution type is no operation with its display name being check, timeout being 0 and comment information being "first Unit under EP". At the next step, rightward execution is performed. At the current step, the result is set to OK as shown in FIG. 6.

In some embodiments, each nested subprogram is associated with the corresponding execution unit of the main program, which includes:
setting the name of the two-dimensional object array corresponding to each nested subprogram includes the coordinate value of the cell where each nested subprogram corresponds to its execution unit in the main program; and, associating the execution unit corresponding to the cell coordinate value in the name of the two-dimensional object array with the main program where the execution unit is located.

In some embodiments, associating each nested subprogram with the corresponding execution unit of the upper-level nested subprogram corresponding to the each nested subprogram includes:
setting the name of the two-dimensional object array corresponding to each nested subprogram, wherein a separator is set between the name of the two-dimensional object array corresponding to the upper-level nested subprogram and the cell coordinate value of the corresponding execution unit in the upper-level nested subprogram corresponding to each nested subprogram; and, extracting the content at the left of the last separator in the name of the two-dimensional object array corresponding to each nested subprogram to match the rest of the names of other two-dimensional object arrays; when the matching is successful, associating the execution unit corresponding to the cell coordinate value at the right of the last separator in the name of the two-dimensional object array with the nested subprogram parsed by the two-dimensional object array containing the execution unit.

Specifically, the separator may be any symbol allowable by table for naming, for example, includes but not limited to "|", ", ", ".", ">" and the like. In this embodiment, "|" is taken as an example.

### Case 5

The method of associating each nested subprogram with the corresponding execution unit of the upper-level nested subprogram corresponding to the each nested subprogram will be detailed below with one case.

As shown in FIG. 7, the two-dimensional object array file may be understood as a file similar to the table file. If one two-dimensional object array file includes five pages of two-dimensional object arrays, the first page is the two-dimensional object array corresponding to the main program and other pages are all the two-dimensional object array corresponding to the nested subprograms. The name of the two-dimensional object array in the second page is A7, which represents the content of the two-dimensional object array is the nested subprogram of the execution unit at the A7 cell position in the main program page. The name of the two-dimensional object array of the nested subprograms in the third page is "A7|A4", which represents the content of the two-dimensional object array is the nested subprogram of the execution unit at the A4 cell position in the A7 page, and so on.

The name of the two-dimensional object array of the nested subprograms in the third page is "A7|A4", and the execution unit at the C5 cell position of the two-dimensional object array is an execution unit with a lower-level nested subprogram. Thus, the method of associating the execution unit at the C5 cell position with the lower-level nested program is described below.

Firstly, the two-dimensional object array of the lower-level nested subprogram corresponding to the cell C5 is named "A7|A4|C5" like the fourth page of two-dimensional object arrays shown in FIG. 8.

Then, the content "A7|A4" at the left of the last separator in the name "A7|A4|C5" of the two-dimensional object arrays in the fourth page is extracted and matched one by one with the names of other two-dimensional object arrays, and as shown above, finally matched to the third page of two-dimensional object arrays. Thus, the corresponding execution unit in the third page of two-dimensional object arrays corresponding to the cell coordinate value "C5" at the right of the last separator in the name of the fourth page of two-dimensional object arrays is associated with the nested subprogram parsed by the fourth page of two-dimensional object arrays.

Specifically, the method of associating the nested subprograms in this embodiment with the corresponding execution units of the main program can achieve the nesting of multiple layers.

In some embodiments, based on program types in the graphics program, the corresponding table pages are created sequentially, which includes:
writing the execution units of the main program and the connection relationship between the execution units, in the form of text, into the corresponding cells of the table pages to create the flowchart region;
if the execution unit is an execution unit supporting rightward execution, displaying in the sequence of the execution direction the execution unit, the right-side execution unit connected to it, and their connection relationship in the cells in the same row but in different columns;
if the execution unit is an execution unit supporting downward execution, displaying in the sequence of the execution direction the execution unit and the lower execution unit connected to it in the cells in the same column but in different rows;
wherein the text form of the execution units is of execution unit type character and the text form of the connection relationship is of connector.

Specifically, the connector may be, for example, but not limited to a symbol such as "-" and "_" and the like.

### Case 6

The method of creating the corresponding table pages sequentially based on the program types in the graphics program will be detailed below with one case.

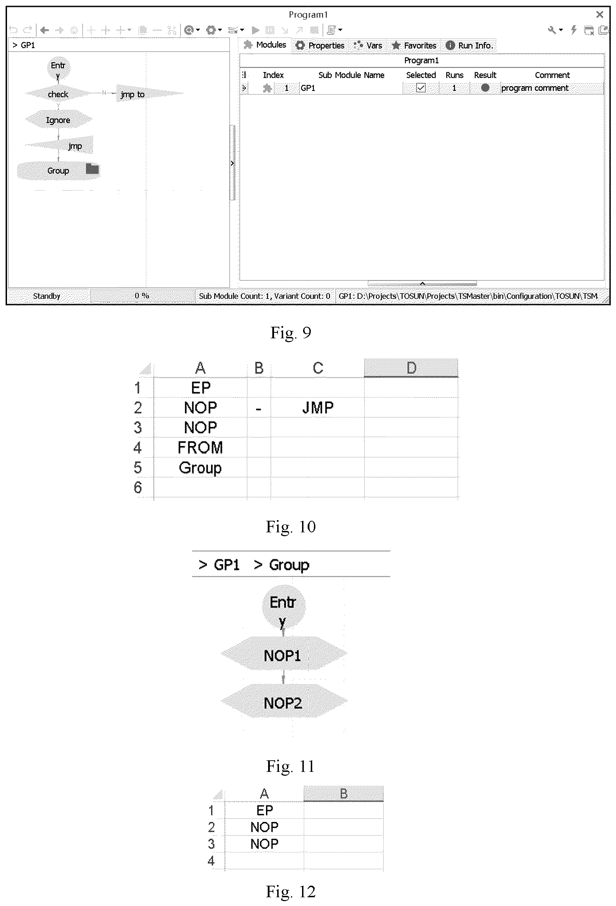

The exemplary graphics program is as shown in FIG. 9.

The name (type) of each execution unit in the main program in the graphics program is as follows:

Entry (EP), check (NOP), Ignore (NOP), jmp to (JMP), jmp from (FROM), Group (Group).

Their jump relationship is shown below:
Entry jumps downward to check and thus Entry and check are in a same column;
check branches and jumps downward to Ignore and thus check and Ignore are in a same column;
check branches and jumps rightward to jmp to, and thus check and jump to are in a same row, and check is added rightward with one connector and then connected rightward to jump to;

Ignore jumps downward to jmp from and thus Ignore and jmp from are in a same column;
jmp to jumps rightward to jmp from; since the jump is not to directly connect with jmp to, the jump to and the jmp from are not in a same row;
jmp from jumps downward to Group and thus jmp from and Group are in a same column;

The finally-output table contents are as shown in FIG. 10, where the region where the A to C columns are located is the created flowchart region.

In some embodiments, creating the corresponding table pages sequentially based on the program types in the graphics program further includes:
if there is an execution unit with a nested subprogram in the main program, writing, in the form of text, the inter-execution-unit connection relationship of the nested subprogram corresponding to the execution unit into the corresponding cells of the table pages, wherein the table page in which the execution unit of the nested subprogram is written is different from the table page into which the execution unit of the main program is written; and,
setting the name of the page to the cell coordinate value of the execution unit with the nested subprogram in the main program.

### Case 7

The method of creating the corresponding table pages sequentially based on the program types in the graphics program will be detailed below with one case.

With the graphics program in FIG. 4 as an example, the execution unit "Group" of the main program GP1 includes a nested subprogram shown in FIG. 11.

Firstly, based on the method of creating the table page corresponding to the main program, the table page corresponding to the nested subprogram is created, as shown in FIG. 12.

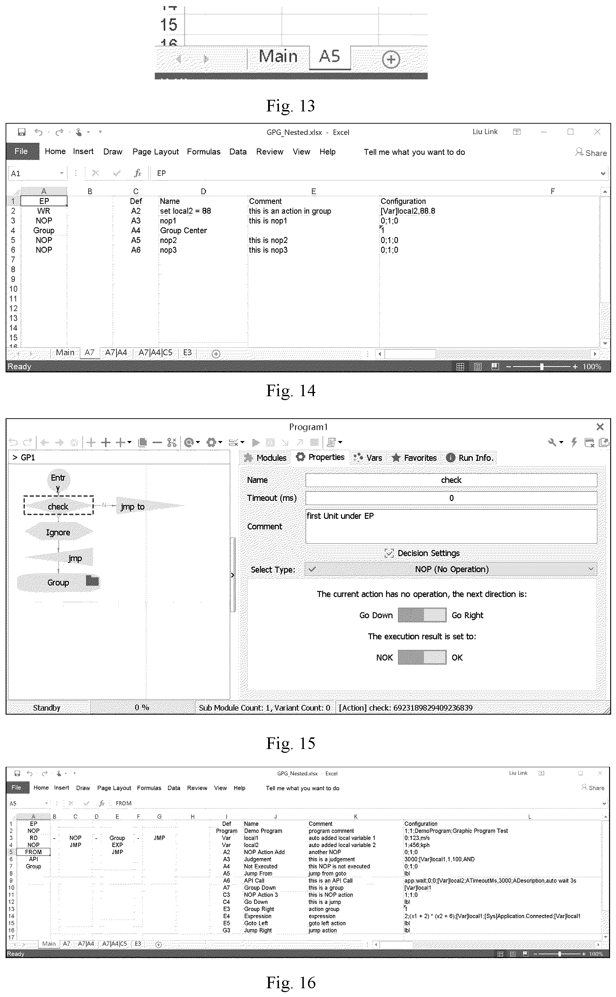

Next, the page name of the table page is set to the cell coordinate value A5 of the execution unit with the nested subprogram in the main program as shown in FIG. 13.

In some embodiments, if there is an execution unit with a lower-level nested subprogram in a nested subprogram, setting the name of the table page where the lower-level nested subprogram of the nested subprogram is located to: the name of the table page where the nested subprogram is located + "separator" + the cell coordinate value of the execution unit with the lower-level nested subprogram in the nested subprogram.

### Case 8

For example, as shown in FIG. 14, it is a nested subprogram with the page name A7, and the execution unit at the A4 cell is an execution unit with a lower-level nested subprogram. The name of the page where the lower-level nested subprogram is located is set to: the name "A7" of the page where the nested subprogram is located + separator "|" + the cell coordinate value "A4" of the execution unit with the lower-level nested subprogram in the nested subprogram, finally forming the page name "A7|A4".

In some embodiments, based on the program types in the graphics program, creating the corresponding table pages sequentially further includes:
respectively defining a property region in each table page, and creating the definition column, the name column, the comment column and the parameter configuration column in the corresponding property region;
from top to bottom, sequentially writing the character contents of the program definition , the variable definition and the execution unit definition into the cells of the definition column, wherein the character content of the execution unit definition is the corresponding cell coordinate value;
sequentially writing the property character content of each definition by row into the corresponding cell of the name column, the comment column and the parameter configuration column.

### Case 9

Taking the submodule GP1, the variable v0 and the execution unit check of the graphics program Program 1 in the preceding case as an example, detailed descriptions are made on the method of creating a property region composed of a definition column, a name column, a comment column and a parameter configuration column on each page.

Firstly, a right region spaced one blank column from the flowchart region is defined as a property region in the table page corresponding to the corresponding program in the graphics program, and a definition column, a name column, a comment column and a parameter configuration column with their respective names being Def, Name, Comment and Configuration are created in the property region.

Program is added to the definition column of the property region of the table page corresponding to the main program, the cell of the name column of the same row is modified to the submodule name "GP1", and the cell of the comment column of the same row is modified to the submodule comment "program comment", and finally the cell of the parameter configuration column of the same row is modified to the submodule configuration information "1;1;am_GP1;Program1". At last, the display contents of this row are as follows:

| | | | |
|---|---|---|---|
| Program | GP1 | program comment | 1; 1;am_GP1 ;Program1 |

Based on the number of the variables, Var is added one by one by row to the definition column of the property region of the table page corresponding to the main program, the cell of the name column of the same row is modified to the variable name "v0" and the cell of the comment column of the same row is modified to the variable comment "variable define", and finally the cell of the parameter configuration column of the same row is modified to the submodule configuration information "0;0;". At last, the display contents of this row are as follows:

| | | | |
|---|---|---|---|
| Var | v0 | variable define | 0;0; |

Next, based on the number of the execution units, the execution unit property in each type of programs is output one by one by row. The execution unit check is taken as an example as shown in FIG. 15.

Firstly, the cell coordinate value A2 of the execution unit is output in the definition column; next, the name "check" of the execution unit is output in the name column; next, the comment "first Unit under EP" of the execution unit is output in the comment column; finally, the configuration information "0;0;" of the execution unit is output in the parameter column.

### Case 10

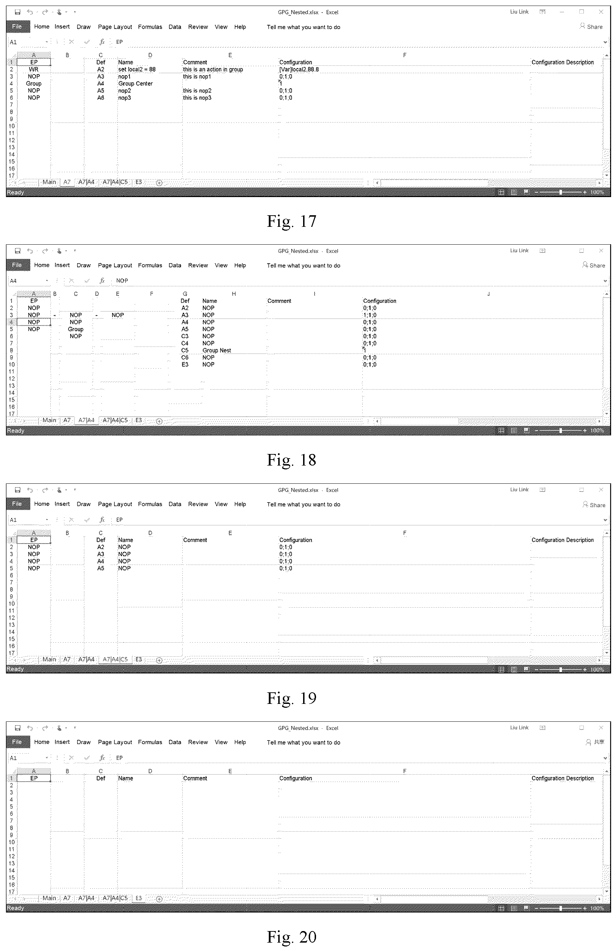

With a table file of vehicular part test scripts as an example, the process of converting a table file into a graphics program will be described below. This table file includes five pages of Excel. The first page of table is the main program Main as shown in FIG. 16; the second page of table is as shown in FIG. 17; the third page of table is as shown in FIG. 18; the fourth page of table is as shown in FIG. 19; and the fifth page of table is an empty table as shown in FIG. 20.

The above table file is read into the corresponding two-dimensional object arrays and the name of each two-dimensional object array is set to a corresponding page name. With the first page of table as an example, a two-dimensional object array is generated as in the Table below.

| EP | | | | | | | | Def | Name | Comment | Configuration |
|---|---|---|---|---|---|---|---|---|---|---|---|
| NOP | | | | | | | | Prog ram | Demo Program | program comment | 1;1;DemoProgram; Graphic Program Test |
| RD | - | NOP | - | Group | - | JMP | | Var | local1 | auto added local variable 1 | 0;123;m/s |
| NOP | | JMP | | EXP | | | | Var | local2 | auto added local variable 2 | 1;456;kph |
| FRO M | | | | JMP | | | | A2 | NOP Action Add | another NOP | 0;1;0 |
| API | | | | | | | | A3 | Judgeme nt | this is a judgement | 3000;[Var]local1,1,100, AND |
| Group | | | | | | | | A4 | Not Execute d | this NOP is not executed | 0;1;0 |
| | | | | | | | | A5 | Jump From | jump from goto | lbl |
| | | | | | | | | A6 | API Call | this is an API Call | app.wait;0;0;[Var]local2; ATimeoutMs,3000; |
| | | | | | | | | | | | ADescription, auto wait 3s |
| | | | | | | | | A7 | Group Down | this is a group | [Var]local1 |
| | | | | | | | | C3 | NOP Action 3 | this is NOP action | 1;1;0 |
| | | | | | | | | C4 | Go Down | this is a jump | lbl |
| | | | | | | | | E3 | Group Right | action group | 1 |
| | | | | | | | | E4 | Expressi on | expression | 2;(x1 + 2) * (x2 + 6);[Var]local1; [Sys]Application. Connected; [Var]local1 |
| | | | | | | | | E5 | Goto Left | goto left action | lbl |
| | | | | | | | | G3 | Jump Right | jump action | lbl |

Each two-dimensional object array is parsed. Firstly, the flowchart region in the two-dimensional object array is parsed to obtain the transition relationship between the execution units; next, the property region in the two-dimensional object array is parsed to obtain the property of the program, the variable property and the property information of each execution unit.

After the parsing of all two-dimensional object arrays is completed, the creation of the graphics program is started in the following steps.

Firstly, the graphics program is created based on the property information of a target graphics program. For example, the name of the current graphics program submodule is Demo Program and the comment information is program comment.

Next, based on the variable information of the target graphics program, a variable, for example, local 1 and local 2, is added to the graphics program.

Next, based on the parsed flowchart region, the execution units of the main program of the graphics program and the transition relationship between the execution units are created.

Next, based on the parsed flowchart region, each nested subprogram of the graphics program is created and then associated with the corresponding execution unit of the main program.

Finally, based on the parsed flowchart region, each execution unit in the nested subprograms of the graphics program and the transition relationship between the execution units are created; based on the execution unit information of the target graphics program, each execution unit of the graphics program is configured.

The converting method of other pages can be referred to the preceding descriptions of this embodiment and will not be described redundantly.

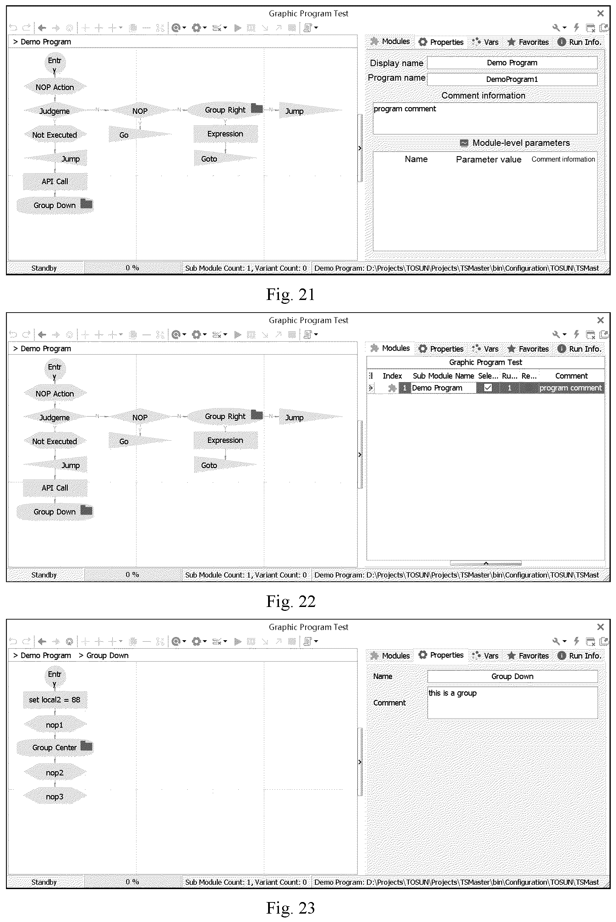

Finally, the creation of the graphics program is completed, where the main program of the graphics program is as shown in FIG. 21. The test scripts may be run directly and the program can execute test process based on the logic defined in the table file.

### Case 11

With one graphics program submodule Demo Program of vehicular part test scripts as an example, the process of converting a graphics program into a table file is described below. This graphics program has five flowcharts. The first flowchart is a flowchart corresponding to the main program as shown in FIG. 22.

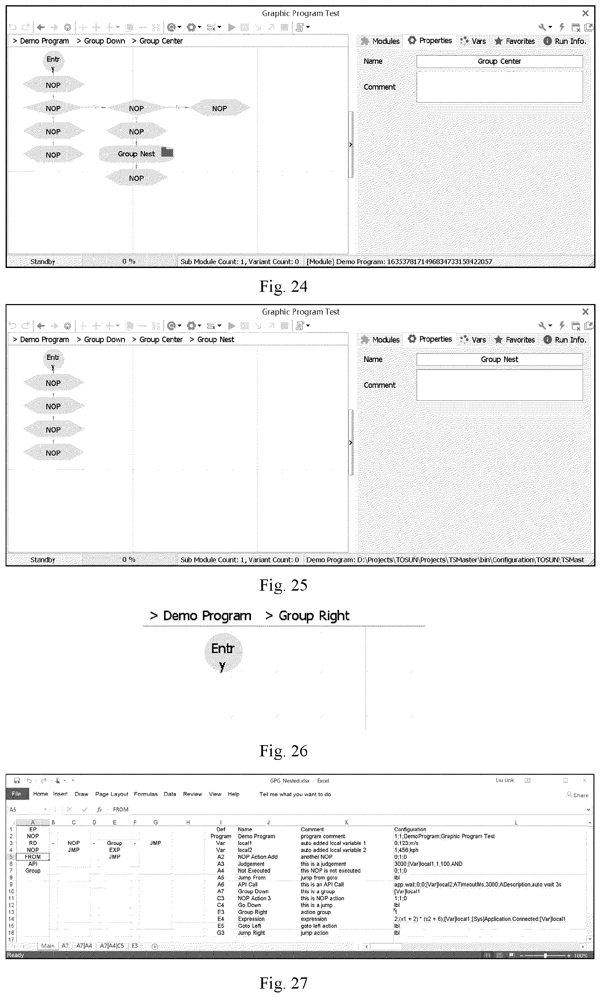

The second flowchart is a flowchart corresponding to the first-layer nested subprogram, as shown in FIG. 23. The third flowchart is a flowchart corresponding to the second-layer nested subprogram, as shown in FIG. 24. The fourth flowchart is a flowchart corresponding to the third-layer nested subprogram, as shown in FIG. 25. The fifth flowchart is an empty flowchart as shown in FIG. 26.

Firstly, for each flowchart, a corresponding table page which includes a flowchart region and a property region is output. Next, starting from the flowchart of the main program, each execution unit in the chart is traversed, the execution unit of the flowchart containing the nested subprogram is associated with the corresponding nested subprogram, and, based on a rule, the name of the corresponding table page is modified. Finally, the entire table file is stored. In this way, the conversion from the graphics file to the table file is achieved. The specific conversion process can be referred to the preceding contents of this embodiment and will not be described redundantly.

The converted table file is as shown in FIG. 27.

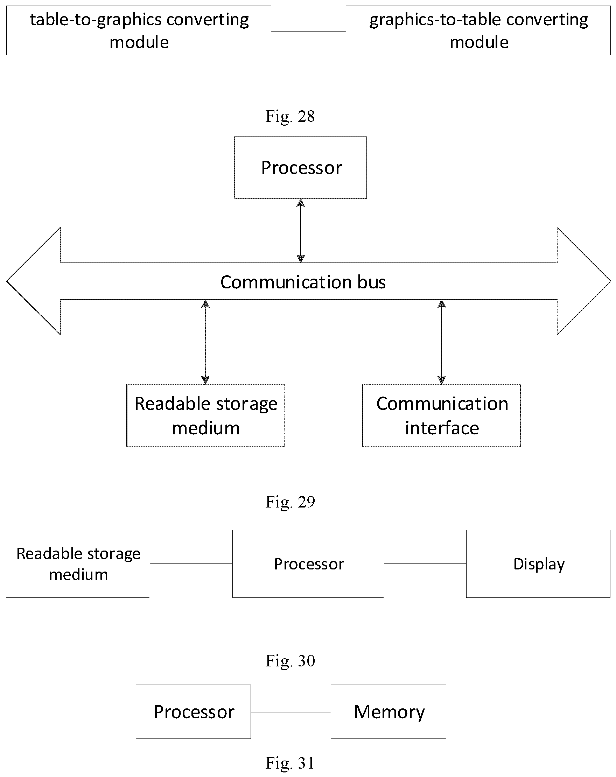

As shown in FIG. 28, some embodiments further provide a conversion system, which includes a computer device, which is configured to include:

a table-to-graphics converting module, configured to: read a table file in order to read the text contents and coordinate information of all cells on at least one page of the table file into corresponding two-dimensional object arrays and set the name of each two-dimensional object array to the corresponding page name; sequentially parse each two-dimensional object array into a flowchart region and a property region page by page; and create the graphics program based on the parse result; and/or,

a graphics-to-table converting module, configured to create blank table pages, wherein the number of the blank table pages is equal to the sum of the number of main programs and the number of the nested sub-programs in the graphics program; based on program types in the graphics program, create corresponding table pages sequentially, wherein one page corresponds to the main program and other pages all correspond to the corresponding nested subprograms; store the created table file.

The specific functions of the table-to-graphics converting module and the graphics-to-table converting module are implemented in the computer device. For details, reference may be made to the contents of the above converting method between a table file and a graphics program and no redundant descriptions are made herein.

In some embodiments, the table-to-graphics converting module and the graphics-to-table converting module can be used independently or in combination based on actual scenarios.

From the angle of hardware processing, the electronic device in the embodiments of the present disclosure will be described below.

The embodiments of the present disclosure do not constitute any limitation to the specific implementation of the electronic device.

As shown in FIG. 29, some embodiments further provide an electronic device, which includes a processor and a readable storage medium and may also include a communication bus and a communication interface. The processor, the readable storage medium and the communication interface perform mutual communication via the communication bus; the readable storage medium is configured to store programs of performing the converting method between a table file and a graphics program, and the programs cause the processor to perform the operations corresponding to the converting method.

As shown in FIG. 30, some embodiments further provide an electronic device, which includes:
a processor, a display communicating with the processor to present a table file or a graphics interface and a readable storage medium; where,
the readable storage medium is configured to store instruction programs;
the processor is configured to execute the instruction programs so as to perform the operations of:
reading a table file in order to read the text contents and coordinate information of all cells on at least one page of the table file into corresponding two-dimensional object arrays and setting the name of each two-dimensional object array to the corresponding page name; sequentially parsing each two-dimensional object array into a flowchart region and a property region page by page; and creating a graphics program based on the parse result; and/or,
creating blank table pages, wherein the number of the blank table pages is equal to the sum of the number of main programs and the number of the nested sub-programs in the graphics program; based on program types in the graphics program, creating corresponding table pages sequentially, wherein one page corresponds to the main program and other pages all correspond to the corresponding nested subprograms; storing the created table file;
wherein the display is configured to display the table file or display the graphics program via the graphics interface.

In some embodiments, the computer device, the industrial personal computer and apparatus may also be used as one of the electronic devices.

The structures shown in FIGS. 29 and 30 do not constitute any limitation to the electronic device, and the electronic device may further include more or less components than shown in the drawings or combine some components or have different component deployments.

In some embodiments, the communication interface may be RS232, RS485, USB interface or TYPE interface or the like, which may be connected with an external bus adapter. The communication interface may also include wired or wireless network interface. The network interface may optionally include wired interface and/or wireless interface (such as WI-FI interface, Bluetooth interface and the like), which is usually used to establish communication connection between the server and other computer devices.

The readable storage medium or the computer readable storage medium includes at least one type of memories. The memory includes flash memory, harddisk drive, multimedia card, card type memory (e.g. SD memory or the like), magnetic memory, magnetic disk or compact disk or the like. In some embodiments, the memory may be an internal storage unit in the computer device, for example, a harddisk drive of the computer device. In some other embodiments, the memory may also be an external storage device of the computer device, for example, a plug type hard disk drive, a smart media card (SMC), a secure digital (SD) card, a flash card or the like on the computer device. Furthermore, the memory may include both the internal storage unit in the computer device and the external storage device. The memory may be used to not only store an application software installed on the computer device and various types of data, for example, the codes of the computer programs and the like but also temporarily store data already output or to be output.

In some embodiments, the processor may be a central processing unit (CPU), a processor, a controller, a microcontroller, a microprocessor or another data processing chip, which is used to run the program codes in the memory or process the data, for example, execute the computer programs or the like.

In some embodiments, the communication bus may also be an input/output bus, which may be a Peripheral Component Interconnect (PCI) bus, or an Enhanced Industry Standard Architecture (EISA) bus or the like. The bus may include an address bus, a data bus and a control bus and the like.

Optionally, the computer device may also include a user interface, which may include a display, and an input unit, for example, a keyboard. Optionally, the user interface may also include a standard wired interface and wireless interface. Optionally, in some embodiments, the display may be an LED display, a liquid crystal display, a touch liquid crystal display and an Organic Light-Emitting Diode (OLED) touch display and the like. The display may also be appropriately referred to as display screen or display unit for displaying information processed in the computer device as well as a visual user interface.

The processor executes the programs to perform the steps in the converting method embodiment between the table file and the graphics program shown in FIGS. 1(a)-1(b), for example, the steps in FIGS. 1(a)-1(b). Alternatively, the processor executes the computer programs to implement the functions of the modules or units in the above apparatus embodiments.

Some embodiments further provide a computer readable storage medium configured to store programs of any one of the above converting methods between the table file and the graphics program.

Some embodiments further provide a computer readable storage medium configured to store computer readable instructions. The instructions are executed by at least one processor to perform the above converting method, which specifically includes:
reading a table file in order to read the text contents and coordinate information of all cells on at least one page of the table file into corresponding two-dimensional object arrays and setting the name of each two-dimensional object array to the corresponding page name; sequentially parsing each two-dimensional object array into a flowchart region and a property region page by page; and creating a graphics program based on the parse result; and/or,
creating blank table pages, wherein the number of the blank table pages is equal to the sum of the number of main programs and the number of the nested sub-programs in the graphics program; based on program types in the graphics program, creating corresponding table pages sequentially, wherein one page corresponds to the main program and other pages all correspond to the corresponding nested subprograms; storing the created table file;

For details, reference may be made to the specific descriptions of the converting method between the table file the graphics program and no redundant descriptions are made herein.

Some embodiments further provide a computer program product including computer programs or instructions. The computer programs or instructions are executed on a computer to cause the computer to perform any one of the above converting methods between the table file and the graphics program.

Some embodiments further provide a computer program product, including a computer readable storage medium storing computer readable program codes. The computer readable program codes include instructions which cause at least one processor or one or more computer devices to perform any one of the above converting methods between the table file and the graphics program, including:
reading a table file in order to read the text contents and coordinate information of all cells on at least one page of the table file into corresponding two-dimensional object arrays and setting the name of each two-dimensional object array to the corresponding page name; sequentially parsing each two-dimensional object array into a flowchart region and a property region page by page; and creating a graphics program based on the parse result; and/or;
creating blank table pages, wherein the number of the blank table pages is equal to the sum of the number of main programs and the number of the nested sub-programs in the graphics program; based on program types in the graphics program, creating corresponding table pages sequentially, wherein one page corresponds to the main program and other pages all correspond to the corresponding nested subprograms; storing the created table file.

As shown in FIG. 31, some embodiments further provide a system, including one or more processors; and,
a memory, configured to store one or more programs executable by one or more processors, where the one or more programs include instructions for performing the following actions:
converting a table file into a graphics program, including: reading the table file in order to read the text contents and coordinate information of all cells on at least one page of the table file into corresponding two-dimensional object arrays and setting the name of each two-dimensional object array to the corresponding page name; sequentially parsing each two-dimensional object array into a flowchart region and a property region page by page; and creating the graphics program based on the parse result; and/or,
converting the graphics program into the table file, including: creating blank table pages, wherein the number of the blank table pages is equal to the sum of the number of main programs and the number of the nested sub-programs in the graphics program; based on program types in the graphics program, creating corresponding table pages sequentially, wherein one page corresponds to the main program and other pages all correspond to the corresponding nested subprograms; storing the created table file.

In the several embodiments provided by the present disclosure, it should be understood that the disclosed device and method can be implemented another way. The above device embodiments are merely illustrative, for example, the flowcharts or block diagrams in the drawings show possible system architectures, functions and operations of the device, method, and computer program product in the several embodiments provided by the present disclosure. Thus, each block in the flowcharts or block diagrams may represent one module, one program fragment or one part of codes. The module, the program fragment or the part of codes includes one or more executable instructions for implementing the specified logic functions. It should be noted that in some alternative embodiments, the functions indicated in the blocks may also be performed in a sequence different from that indicated in the drawings. For example, two continuous blocks can be actually performed basically in parallel, and sometimes may be performed in a reverse sequence, which is dependent on the functions involved. It is further noted that each block in the block diagrams and/or flowcharts and the combinations of the blocks in the block diagrams and/or flowcharts may be implemented by a dedicated hardware-based system for executing specified functions or actions, or by combination of dedicated hardware and computer instructions.

Furthermore, the functional modules in the embodiments of the present disclosure can be integrated into one independent part, or exist as separate modules or two or more of the modules are integrated into one independent part.

The functions, when implemented by software function modules and sold or used as independent products, can be stored in one computer readable storage medium. Based on such understanding, the essence of technical solutions of the present disclosure, or a part contributing to the prior arts or a part of the technical solutions can be embodied in the form of software product. The computer software product is stored in one storage medium which includes several instructions to enable one computer device (for example, a personal computer, a server, or a network device or the like) to perform all or part of the steps of the method of each of the embodiments of the present disclosure.

Enlightened by the ideal embodiments of the present disclosure, relevant workers can, based on the contents of the specification, make various changes and modifications within the scope of protection of the technical idea of the present disclosure. The technical scope of the present disclosure is not limited to the contents of the specification but to the technical scope claimed by the claims.

## Claims

1. A converting method between a table file and a graphics program, wherein, converting the table file into the graphics program comprises: reading the table file in order to read the text contents and coordinate information of all cells on at least one page of the table file into corresponding two-dimensional object arrays and setting the name of each two-dimensional object array to the corresponding page name; sequentially parsing each two-dimensional object array into a flowchart region and a property region page by page; and creating the graphics program based on the parse result; and/or,
converting the graphics program into the table file comprises: creating blank table pages, wherein the number of the blank table pages is equal to the sum of the number of main programs and the number of the nested sub-programs in the graphics program; based on program types in the graphics program, creating corresponding table pages sequentially, wherein one page corresponds to the main program and other pages all correspond to the corresponding nested subprograms; storing the created table file.

2. The converting method of claim 1, wherein,
the flowchart region comprises at least one execution unit type character respectively corresponding to execution units in the graphics program; and,
parsing the two-dimensional object array into the flowchart region comprises:
from top to bottom, sequentially reading the text content of each array element and determining the text content;
if the text content is determined as an execution unit type character, determining an execution unit type based on the text content; and when the content of the upper array element of the current execution unit type character is also the execution unit type character, marking the corresponding execution unit as the next execution unit of the upper execution unit;
if the text content is determined as empty, skipping the text content to continue reading the next text content; and,
if an entire column of text contents from top to bottom is empty, completing the parsing of the flowchart region.

3. The converting method of claim 2, wherein,
the flowchart region further comprises a connector;
parsing the two-dimensional object array into the flowchart region further comprises:
from left to right, sequentially reading the text content of each array element and determining the text content;
if the text content is determined as the connector, marking the first execution unit found to the left of the connector as the execution unit supporting rightward execution while marking the first execution unit found to the right of the connector as the next execution unit of the supporting rightward execution of the aforementioned execution unit.

4. The converting method of claim 3, wherein,
the property region comprises a definition column, a name column, a comment column and a parameter configuration column;
parsing the two-dimensional object array into the property region comprises:
from top to bottom, sequentially reading the text content of each array element in the definition column, wherein the text content is one character of the execution unit definition, the variable definition or the program definition;
wherein when one array element is a character content of the program definition, the parameter configuration column corresponding to the array element describes property information of a target graphics program;
when one array element is a character content of the variable definition, the parameter configuration column corresponding to the array element describes variable information of the target graphics program;
when one array element is a character content of the execution unit definition, the parameter configuration column corresponding to the array element describes execution unit information of the target graphics program;
from top to bottom, sequentially reading the text content of each array element in the name column, wherein the text content is the name property character correspondingly defined in the definition column;
from top to bottom, sequentially reading the text content of each array element in the comment column, wherein the text content is the comment property character correspondingly defined in the definition column.

5. The converting method of claim 4, wherein,
creating the graphics program based on the parse result comprises:
based on the property information of the target graphics program, creating the graphics program;
based on the variable information of the target graphics program, adding a variable into the graphics program;
based on the parsed flowchart region, creating the execution units of the main program of the graphics program and the transition relationship between the execution units;
then, based on the parsed flowchart region, creating nested subprograms of the graphics program accordingly, and associating each nested subprogram with a corresponding execution unit of the main program or of its upper-level nested subprogram;
finally, based on the parsed flowchart region, creating execution units accordingly in the nested subprograms of the graphics program and the transition relationship between the execution units; and,
based on the execution unit information of the target graphics program, configuring each execution unit of the graphics program.

6. The converting method of claim 5, wherein,
associating each nested subprogram with the corresponding execution unit of the main program respectively comprises:
setting the name of the two-dimensional object array corresponding to each nested subprogram comprises: the coordinate value of the cell where each nested subprogram corresponds to its execution unit in the main program; and,
associating the execution unit corresponding to the cell coordinate value in the name of the two-dimensional object array with the main program where the execution unit is located; and/or,
associating each nested subprogram with the corresponding execution unit of its corresponding upper-level nested subprogram comprises:
setting the name of the two-dimensional object array corresponding to each nested subprogram, wherein a separator is set between the name of the two-dimensional object array corresponding to the upper-level nested subprogram and the cell coordinate value of the corresponding execution unit in its corresponding upper-level nested subprogram; and,
extracting the content at the left of the last separator in the name of the two-dimensional object array corresponding to each nested subprogram to match the rest of the names of other two-dimensional object arrays; when the matching is successful, associating the execution unit corresponding to the cell coordinate value at the right of the last separator in the name of the two-dimensional object array with the nested subprogram parsed by the two-dimensional object array containing the execution unit.

7. The converting method of claim 1, wherein,
based on the program types in the graphics program, creating the corresponding table pages sequentially comprises:
writing the execution units of the main program and the connection relationship between the execution units, in the form of text, into the corresponding cells of the table pages to create the flowchart region;
if the execution unit is an execution unit supporting rightward execution, displaying in the sequence of the execution direction the execution unit, the right-side execution unit connected to it, and their connection relationship in the cells in the same row but in different columns;
if the execution unit is an execution unit supporting downward execution, displaying in the sequence of the execution direction the execution unit and the lower execution unit connected to it in the cells in the same column but in different rows;
wherein the text form of the execution units is of execution unit type character and the text form of the connection relationship is of connector.

8. The converting method of claim 7, wherein,
based on the program types in the graphics program, creating the corresponding table pages sequentially further comprises:
if there is an execution unit with a nested subprogram in the main program, writing, in the form of text, the inter-execution-unit connection relationship of the nested subprogram corresponding to the execution unit into the corresponding cells of the table pages, wherein the table page in which the execution unit of the nested subprogram is written is different from the table page into which the execution unit of the main program is written; and,
setting the name of the page to the cell coordinate value of the execution unit with the nested subprogram in the main program; and,
if there is an execution unit with a lower-level nested subprogram in a nested subprogram, a method of naming the table page where the lower-level nested subprogram of the nested subprogram is located comprises: setting a separator between the name of the table page where the nested subprogram is located and the cell coordinate value of the execution unit with the lower-level nested subprogram in the nested subprogram; and/or,
based on the program types in the graphics program, creating the corresponding table pages sequentially further comprises:
respectively defining a property region in each table page, and creating the definition column, the name column, the comment column and the parameter configuration column in the corresponding property region;
from top to bottom, sequentially writing the character contents of the program definition, the variable definition and the execution unit definition into the cells of the definition column, wherein the character content of the execution unit definition is the corresponding cell coordinate value;
sequentially writing the property character content of each definition by row into the corresponding cell of the name column, the comment column and the parameter configuration column.

9. A converting method between a table file and a graphics program for vehicular part test scripts, comprising:
based on the converting method of any of claims 1-8, converting the table file for vehicular part test scripts into the graphics program; and/or,
based on the converting method of any of claims 1-8, converting the graphics program for vehicular part test scripts into the table file.

10. A computer readable storage medium, storing computer readable instructions, wherein the computer readable instructions are executed by at least one processor to perform the converting method of any of claims 1-8.

11. An electronic device, comprising:
a processor; and
a readable storage medium storing computer readable instructions, wherein the computer readable instructions are executed by a processor to perform the method of any of claims 1-8.

12. A computer program product, comprising:
a computer program or instruction, where the computer program or instruction is executed on a computer to cause the computer to perform the method of any of claims 1-8.

13. A conversion system, comprising a computer device configured to comprise:
a table-to-graphics converting module, configured to: read a table file in order to read the text contents and coordinate information of all cells on at least one page of the table file into corresponding two-dimensional object arrays and set the name of each two-dimensional object array to the corresponding page name; sequentially parse each two-dimensional object array into a flowchart region and a property region page by page; and create the graphics program based on the parse result; and/or,
a graphics-to-table converting module, configured to create blank table pages, wherein the number of the blank table pages is equal to the sum of the number of main programs and the number of the nested sub-programs in the graphics program; based on program types in the graphics program, create corresponding table pages sequentially, wherein one page corresponds to the main program and other pages all correspond to the corresponding nested subprograms; store the created table file.

14. The conversion system of claim 13, wherein,
the flowchart region comprises at least one execution unit type character respectively corresponding to execution units in the graphics program; and,
parsing the two-dimensional object array into the flowchart region comprises:
from top to bottom, sequentially reading the text content of each array element and determining the text content;
if the text content is determined as an execution unit type character, determining an execution unit type based on the text content; and when the content of the upper array element of the current execution unit type character is also the execution unit type character, marking the corresponding execution unit as the next execution unit of the upper execution unit;
if the text content is determined as empty, skipping the text content to continue reading the next text content; and,
if an entire column of text contents from top to bottom is empty, completing the parsing of the flowchart region; and/or,
parsing the two-dimensional object array into the flowchart region further comprises:
from left to right, sequentially reading the text content of each array element and determining the text content;
if the text content is determined as a connector, marking the first execution unit found to the left of the connector as the execution unit supporting rightward execution while marking the first execution unit found to the right of the connector as the next execution unit of the supporting rightward execution of the aforementioned execution unit.

15. The conversion system of claim 13, wherein,
based on the program types in the graphics program, creating the corresponding table pages sequentially comprises:
writing the execution units of the main program and the connection relationship between the execution units, in the form of text, into the corresponding cells of the table pages to create the flowchart region;
if the execution unit is an execution unit supporting rightward execution, displaying in the sequence of the execution direction the execution unit, the right-side execution unit connected to it, and their connection relationship in the cells in the same row but in different columns;
if the execution unit is an execution unit supporting downward execution, displaying in the sequence of the execution direction the execution unit and the lower execution unit connected to it in the cells in the same column but in different rows;
wherein the text form of the execution units is of execution unit type character and the text form of the connection relationship is of connector.
